# EUROPEAN PATENT APPLICATION

(11) **EP 4 141 718 A1**
(43) Date of publication of application: **01.03.2023**
(21) Application number: 22188281.4
(22) Date of filing: 02.08.2022
(51) Int. Cl.: G06F 21/57

(54) **SYSTEMS AND METHODS FOR AUTOMATED TARA AND AUTOMATED SECURITY CONCEPT**

(30) Priority: 24.08.2021 EP 21192745
(71) Applicant: Elektrobit Automotive GmbH, 91058 Erlangen (DE)
(72) Inventor: Mars, Ayoub, 60488 Frankfurt am Main (DE); Kleinhenz, Thomas, 60488 Frankfurt am Main (DE); Nourbakhsh, Seyed Hami, 60488 Frankfurt am Main (DE)
(74) Representative: Continental Corporation

(57) **Abstract**

The present invention is related to a method, a computer program code, and an apparatus for automatically generating security requirements for a system. In a first step, security related data for the system are retrieved (S1). Based on the security related data, an analysis of the system is automatically performed (S2). Results of the analysis of the system may be provided (S3) to a user for a review. As a result of this review, security claims may be retrieved (S4) from the user. Based on the analysis, security requirements for the system are then automatically generated (S5). The security requirements may then be mapped (S6) to model blocks, if applicable.

## Description

The present invention is related to a method, a computer program code, and an apparatus for automatically generating security requirements for a system.

Threat analysis and risk assessment (TARA) or the provision of a security concept are security activities that are executed manually by security experts for each security-relevant system or component as a target of evaluation. The security expert deepens their knowledge about the target of evaluation prior to thinking about its related assets, damage scenarios, threats, risk assessment, etc. The security expert then creates a security concept for the target of evaluation. Existing tools that may support such activities are, for example, Microsoft Threat Modeling Tool or OWASP Threat Dragon. However, the existing tools have limited functionalities. They require manual work and are applicable only for the threat analysis phase.

The article by S. Mili et al.: "Model-Driven Architecture Based Security Analysis," Systems Engineering, Vol. 24 (2021), pp. 307-321, discloses a model-driven architecture approach for the development of an embedded system validation platform. The approach consists of three steps, namely conceptual modeling of the security requirements, conceptual modeling of the system, and transformation of the models for verification. These three steps are mapped to model-driven architecture concepts by separating the conceptual modeling from the technical platform. The former allows the manipulation of an intermediate model which facilitates communication between the project manager and the client, while the latter carries out the formal verification.

The known concept using known tools has the drawback that it comes with high cost. In addition, it is inefficient when aiming at achieving security by design. There is a possibility that not all possible threats are covered by the security expert. Furthermore, the concept often results in inconsistencies if work is executed by different security experts or for different targets of evaluation. Additionally, security requirements management is done manually. Repetitive manual work is required for any changes in the target of evaluation.

It is an objective of the present invention to provide an improved solution for generating security requirements for a system.

This objective is achieved by a method according to claim 1, by a computer program code according to claim 14, which implements this method, and by an apparatus according to claim 15. The dependent claims include advantageous further developments and improvements of the present principles as described below.

According to a first aspect, a method for automatically generating security requirements for a system comprises the steps of:
- retrieving security related data for the system;
- automatically performing an analysis of the system based on the security related data; and
- automatically generating security requirements for the system based on the analysis.

Accordingly, a computer program code comprises instructions, which, when executed by at least one processor, cause the at least one processor to perform the following steps for automatically generating security requirements for a system:
- retrieving security related data for the system;
- automatically performing an analysis of the system based on the security related data; and
- automatically generating security requirements for the system based on the analysis.

The term computer has to be understood broadly. In particular, it also includes workstations, distributed systems, and other processor-based data processing devices.

The computer program code can, for example, be made available for electronic retrieval or stored on a computer-readable storage medium.

According to another aspect, an apparatus for automatically generating security requirements for a system comprises:
- a retrieving unit configured to retrieve security related data for the system;
- an analysis unit configured to automatically perform an analysis of the system based on the security related data; and
- a security unit configured to automatically generate security requirements for the system based on the analysis.

According to the invention, a solution for automatic generation of security requirements is provided. The solution is based on a developed security process and algorithms, which allows reducing the cost of these security activities, achieving consistency of the results, and easily integrating security by design in the same development environment. It can be used for both targets of evaluation in system level and targets of evaluation in software level. This scalability is due to a provision of various components that facilitate varying levels of automation, and varying parameters, such as treatment decisions options, security risk matrix, interfacing with, etc. Examples of other security process execution steps include requirement management, security testing, and security validation.

In an advantageous embodiment, the security related data are retrieved from a user input. For example, the user input may comprise information for creating a data flow diagram or information about a target of evaluation. The described solution works both independently and together with a system modeling tool. When working independently, the user needs to provide the required information, in particular about the target of evaluation. For example, the user may start by creating a data flow diagram. While not fully automated, even in this operation mode the described solution provides a high level of automation, as it executes all analysis steps automatically based on the user inputs.

In an advantageous embodiment, the security related data are retrieved from an analysis of a system model. When integrated with a system modeling tool, the solution according to the invention automatically analyzes the system model, executes an automatic analysis of the system based on the model analysis, and generates security requirements based on the system analysis. The described solution supports interfacing with system modeling environments such as MathWorks, but it can be used with any system modeling tool.

In an advantageous embodiment, the security requirements are mapped to model blocks. When the security related data are retrieved from an analysis of a system model, the generated security requirements can be mapped to the corresponding blocks of the system model.

In an advantageous embodiment, results of the analysis of the system are provided to a user for a review and security claims are retrieved from the user. In this way, the user has the possibility to inspect the analysis results and to provide possible cybersecurity claims before the security requirements for the system are generated.

In an advantageous embodiment, automatically generating security requirements comprises mapping components resulting from the analysis of the system to a threat database. This threat database stores a list of threats with their risk assessment and mitigations. Use of such a threat database ensures very consistent results of security requirement generation.

In an advantageous embodiment, mapping components to the threat database is based on a user input. For example, the user may select a corresponding component from the database by means of a displayed list.

In an advantageous embodiment, changes of the system automatically trigger another iteration of automatically generating security requirements. This tremendously reduces the necessary efforts and allows achieving security by design.

In an advantageous embodiment, the analysis of the system constitutes a threat analysis and risk assessment. Furthermore, the generated security requirements may be incorporated into a security concept. The described solution is very helpful for simplifying typical cybersecurity activities, especially the threat analysis and risk assessment and the generation of a cybersecurity concept, and to tremendously reduce the required time to perform such activities. Furthermore, the solution allows achieving consistent results with good quality following existing standards such as ISO/SAE 21434.

In an advantageous embodiment, the system is a vehicular system. The described solution is particularly useful for the automotive market with its strict security requirements. However, it can be used in any industry for any security relevant system or component.

Further features of the present invention will become apparent from the following description and the appended claims in conjunction with the figures.

### Figures

- Fig. 1: schematically illustrates a method for automatically generating security requirements for a system;
- Fig. 2: schematically illustrates a first embodiment of an apparatus for automatically generating security requirements for a system;
- Fig. 3: schematically illustrates a second embodiment of an apparatus for automatically generating security requirements for a system;
- Fig. 4: schematically illustrates a high-level description of a solution according to the invention;
- Fig. 5: schematically illustrates use of a solution according to the invention in a system modeling environment;
- Fig. 6: schematically illustrates use of a solution according to the invention as a separate tool;
- Fig. 7: schematically illustrates main components of a tool implementing a solution according to the invention;
- Fig. 8: schematically illustrates a generic electronic control unit; and
- Fig. 9: shows a table with sample components per component type.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, by a plurality of individual processors, some of which may be shared, by a graphic processing Unit (GPU), or by banks of GPUs. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random-access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

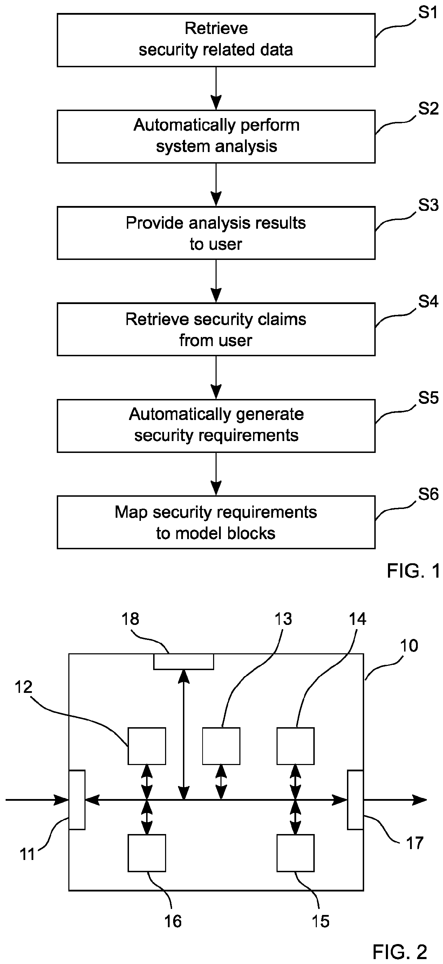

Fig. 1 schematically illustrates a method according to the invention for automatically generating security requirements for a system, e.g. a vehicular system. In a first step, security related data for the system are retrieved S1. For example, the security related data may be retrieved S1 from a user input or from an analysis of a system model. In case of a user input, the user input advantageously comprises information for creating a data flow diagram or information about a target of evaluation. Based on the security related data, an analysis of the system is automatically performed S2. For example, the analysis of the system may constitute a threat analysis and risk assessment. Results of the analysis of the system may be provided S3 to a user for a review. As a result of this review, security claims may be retrieved S4 from the user. Based on the analysis, security requirements for the system are then automatically generated S5. For this purpose, components resulting from the analysis of the system may be mapped to a threat database. This mapping may be based on a user input. The generated S5 security requirements may be incorporated into a security concept. The security requirements may then be mapped S6 to model blocks, if applicable. Advantageously, changes of the system automatically trigger another iteration of automatically generating security requirements.

Fig. 2 schematically illustrates a block diagram of a first embodiment of an apparatus 10 according to the invention for automatically generating security requirements for a system, e.g. a vehicular system. The apparatus 10 has an input 11, via which a retrieving unit 12 retrieves security related data for the system. For example, the security related data may be retrieved from a user input or from an analysis of a system model. In case of a user input, the user input advantageously comprises information for creating a data flow diagram or information about a target of evaluation. An analysis unit 13 is configured to automatically perform an analysis of the system based on the security related data. For example, the analysis of the system may constitute a threat analysis and risk assessment. A security unit 14 is configured to automatically generate security requirements for the system based on the analysis. For this purpose, components resulting from the analysis of the system may be mapped to a threat database. This mapping may be based on a user input. The generated security requirements may be incorporated into a security concept. Advantageously, changes of the system automatically trigger the apparatus to perform another iteration of automatically generating security requirements. The generated security requirements or other processing results may be provided to further processing systems via an output 17 of the apparatus 10. The output 17 may be combined with the input 11 into a single interface. A local storage unit 16 is provided for storing data during processing.

The retrieving unit 12, the analysis unit 13, and the security unit 14 may be controlled by a control unit 15. A user interface 18 may be provided for enabling a user to modify settings of the retrieving unit 12, the analysis unit 13, the security unit 14, or the control unit 15. The user interface 18 may further be used for the above-mentioned user interaction during the automatic generation of the security requirements. The retrieving unit 12, the analysis unit 13, the security unit 14, and the control unit 15 can be embodied as dedicated hardware units. Of course, they may likewise be fully or partially combined into a single unit or implemented as software running on a processor, e.g., a CPU or a GPU.

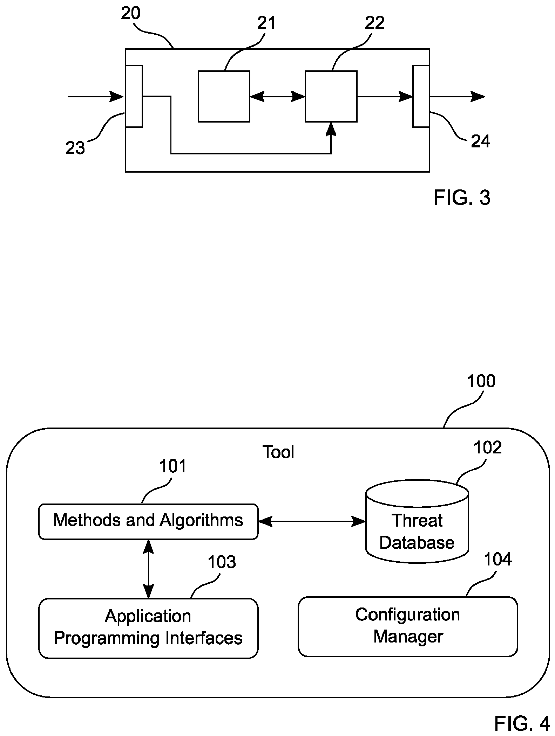

A block diagram of a second embodiment of an apparatus 20 according to the invention for automatically generating security requirements for a system is illustrated in Fig. 3. The apparatus 20 comprises a processing device 22 and a memory device 21. For example, the apparatus 20 may be a computer, an electronic control unit or an embedded system. The memory device 21 has stored instructions that, when executed by the processing device 22, cause the apparatus 20 to perform steps according to one of the described methods. The instructions stored in the memory device 21 thus tangibly embody a program of instructions executable by the processing device 22 to perform program steps as described herein according to the present principles. The apparatus 20 has an input 23 for receiving data. Data generated by the processing device 22 are made available via an output 24. In addition, such data may be stored in the memory device 21. The input 23 and the output 24 may be combined into a single bidirectional interface.

The processing device 22 as used herein may include one or more processing units, such as microprocessors, digital signal processors, or a combination thereof.

The local storage unit 16 and the memory device 21 may include volatile and/or non-volatile memory regions and storage devices such as hard disk drives, optical drives, and/or solid-state memories.

In the following, further details of a solution according to the invention shall be given.

Fig. 4 schematically illustrates a high-level description of a solution according to the invention. In this example, the solution is implemented as a tool 100, e.g. as a software tool for automatic threat analysis and risk assessment or security concept generation. The tool 100 contains methods and algorithms 101 that are used to automate the process of security requirement generation and mapping. The methods and algorithms 101 interact with a threat database 102, which stores a list of threats with their risk assessment and mitigations. This threat database 102 is created based on a concept that will be described below. The tool 100 further integrates application programming interfaces (APIs) 103 to interact with other tools when used in a system modeling environment. To achieve high scalability, the tool contains a configuration manager 104, which allows fulfilling various users' requirements. For instance, different companies are typically using different risk matrices and different risk treatment decision options. Also, companies operating in different fields need to fulfill requirements from different standards. The configuration manager 104 allows users to select what fit best to their targeted environment. The tool 100 can be used for any system or component. It can be used in a system modeling environment or separately.

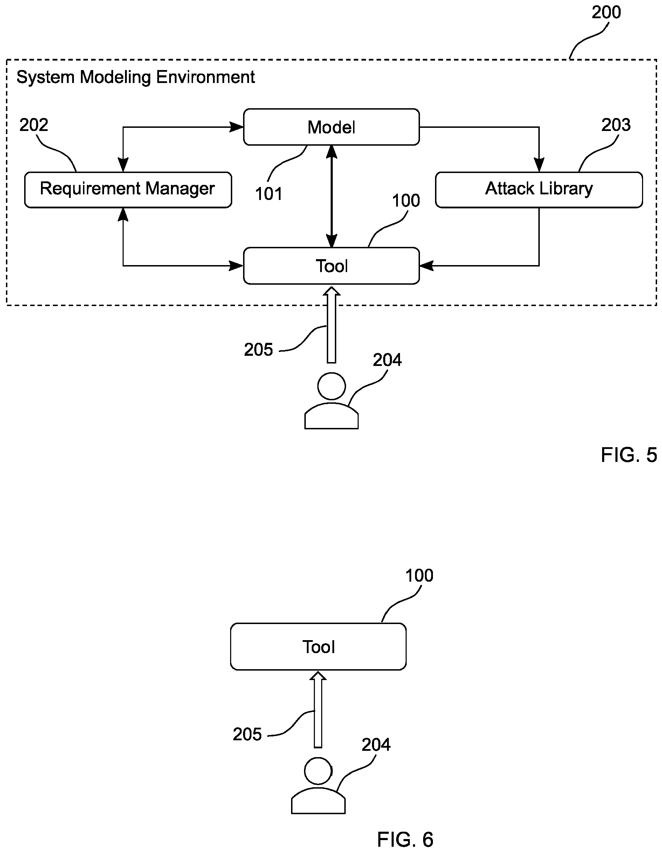

Fig. 5 schematically illustrates use of a solution according to the invention in a system modeling environment 200. When used in a system modeling environment 200, the tool 100 extracts security related data from a model 201 and automatically executes an analysis, such as a threat analysis and risk assessment. A user 204 can then review the results and provide possible cybersecurity claims as input 205. Security requirements are then automatically generated and mapped to the system model blocks model through a requirement manager 202. In such an environment, security testing can be performed. For this purpose, the tool may make use of an attack library 203. The results of security can be directly considered by the tool 100. Any changes on the system model 201 automatically trigger another iteration of this process, which tremendously reduces the necessary efforts and allows achieving security by design.

Fig. 6 schematically illustrates use of a solution according to the invention as a separate tool 100. When used independently, the user 204 provides as input 205 all required information about the target of evaluation. For example, the user may start by creating a data flow diagram (DFD). Also in this operation mode the tool 100 provides a high level of automation, as it executes all analysis steps automatically based on the user inputs 204. The output is like when used in a system modeling environment except for differences in the mapping of the security requirements, as in this case this is only based on the data flow diagram.

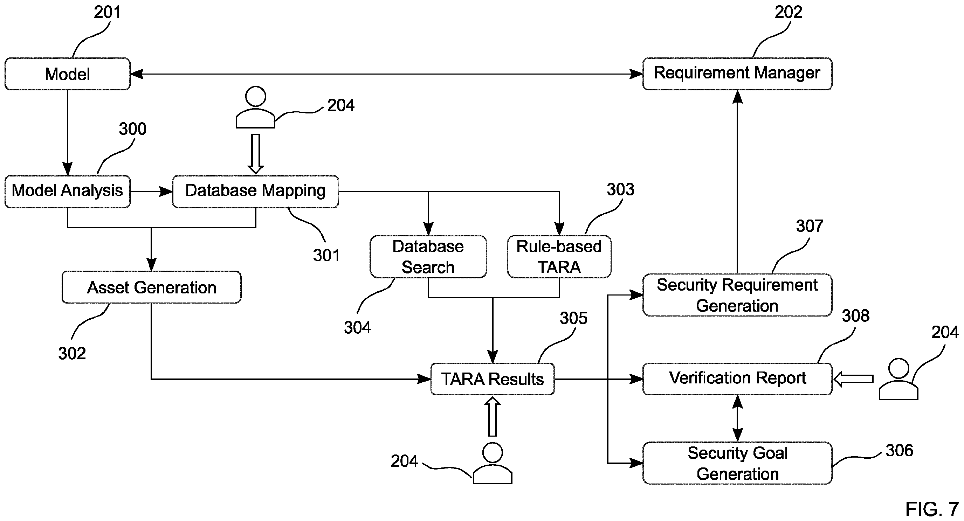

Fig. 7 schematically illustrates the main components of a tool implementing a solution according to the invention. In this example, the tool is configured to perform a threat analysis and risk assessment. As can be seen in the figure, the process starts with an analysis 300 of the model 201 to create a data flow diagram. Of course, other types of diagrams can be used as well. The data flow diagram describes all components and sub-components that exist in the model 201 as well as their interactions. For each component or sub-component, the user 204 selects a corresponding component from a database by means of a displayed list. Based on the output results of both the model analysis 300 and the database mapping 301, a generation of assets 302 is performed automatically. In a later step, threats will be mapped to these assets. The threat analysis and risk assessment deploy two main methods, i.e. a rule-based threat analysis and risk assessment 303 and a database search 304.

The rule-based threat analysis and risk assessment 303 reduces the probability to generate redundant threats. Furthermore, it reduces the size of the threat database. The rule-based threat analysis and risk assessment 303 uses a set of predefined rules to generate threats with their assessment, etc., for special component types or interfaces. The set of rules can be adapted or extended by the user 204 to cover special cases. In the database search 304 the tool searches in the database for corresponding threats for each of the components or sub-components existing in the data flow diagram. For each threat, the corresponding security risk is predefined in the database with all relevant parameters.

Once the threat analysis and risk assessment results 305 are available, the user 204 can review and edit the results if needed. The user 204 also has the possibility to make decisions on risk treatment. Based on these decisions, the tool automatically generates security goals 306, when required. When the review is finalized, the tool performs an automatic security requirement generation 307 and maps the generated security requirements to the nodes of the data flow diagram, i.e. the components and sub-components, or the model blocks when used in a system modeling environment. Furthermore, a verification report 308 may be generated for inspection by the user 204.

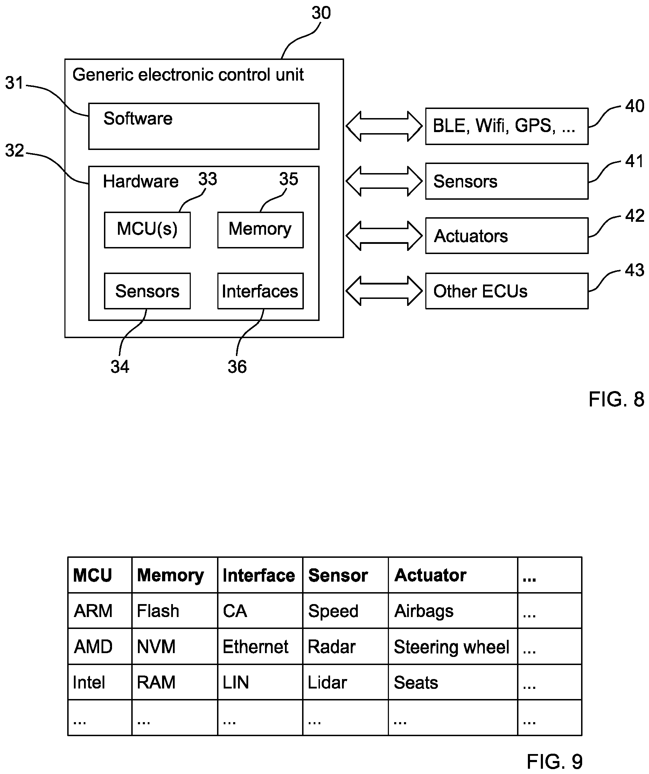

Creating a threat database for vehicular systems requires considering various systems with different types of controllers, sensors, interfaces, and actuators. However, different systems typically have components that can also be found in other systems. Hence, if one wants to create a threat database based on the results of performing a threat analysis on most existing or possible systems, this will result in a high redundancy in the threats and may lead to inconsistent results, especially with regard to risk assessment. To solve this challenge, a special approach is proposed for creating a threat database for vehicular systems. The basic idea is to consider a generic electronic control unit (ECU) 30, as depicted in Fig. 8. The generic electronic control unit 30 comprises different component types, which may be software 31 as well as hardware 32. Hardware component types are, for example, microcontroller units (MCU) 33, sensors 34, memory 35, or interfaces 36. The generic electronic control unit 30 interacts with other components, such as external systems 40 like a Bluetooth low energy (BLE) system, a Wi-Fi system or a system global positioning system (GPS), sensors 41, actuators 42, or other electronic control units 43.

Each component type is associated with a list of possible components, as shown in the table depicted in Fig. 9. Some of these are generic descriptions, others might be trademarks having technical properties or features known to the skilled person. A proper threat analysis and risk assessment for this generic electronic control unit 30 will result in a list of threats and their assessment, where some of the threats will be specific to distinct components and others are shared between a set of components. The rule-based threat analysis and risk assessment covers any threat that is shared between components or a communication between components, etc., whereas specific threats that are related to one of the components, e.g. radar, are considered in the threat database.

### Reference numerals

- 10: Apparatus
- 11: Input
- 12: Retrieving unit
- 13: Analysis unit
- 14: Security unit
- 15: Control unit
- 16: Local storage unit
- 17: Output
- 18: User interface
- 20: Apparatus
- 21: Memory device
- 22: Processing device
- 23: Input
- 24: Output
- 30: Generic electronic control unit
- 31: Software
- 32: Hardware
- 33: Microcontroller unit
- 34: Sensor
- 35: Memory
- 36: Interface
- 40: External system
- 41: Sensor
- 42: Actuator
- 43: Electronic control unit
- 100: Tool
- 101: Methods and algorithms
- 102: Threat database
- 103: Application programming interface
- 104: Configuration manager
- 200: System modeling environment
- 201: Model
- 202: Requirement manager
- 203: Attack library
- 204: User
- 205: Input
- 300: Model analysis
- 301: Database mapping
- 302: Generation of assets
- 303: Rule-based threat analysis and risk assessment
- 304: Database search
- 305: Threat analysis and risk assessment results
- 306: Security goal generation
- 307: Security requirement generation
- 308: Verification report

- S1: Retrieve security related data
- S2: Automatically perform system analysis
- S3: Provide analysis results to user
- S4: Retrieve security claims from user
- S5: Automatically generate security requirements
- S6: Map security requirements to model blocks

## Claims

1. A method for automatically generating security requirements for a system, the method comprising:
- retrieving (S1) security related data for the system;
- automatically performing (S2) an analysis of the system based on the security related data; and
- automatically generating (S5) security requirements for the system based on the analysis.

2. The method according to claim 1, wherein the security related data are retrieved (S1) from a user input (205).

3. The method according to claim 2, wherein the user input (205) comprises information for creating a data flow diagram.

4. The method according to claim 2 or 3, wherein the user input (205) comprises information about a target of evaluation.

5. The method according to claim 1, wherein the security related data are retrieved (S1) from an analysis of a system model (201).

6. The method according to claim 5, further comprising mapping (S6) the security requirements to model blocks.

7. The method according to claim 5 or 6, further comprising:
- providing (S3) results of the analysis of the system to a user (204) for a review; and
- retrieving (S4) security claims from the user (204).

8. The method according to one of the preceding claims, wherein automatically generating (S5) security requirements comprises mapping components resulting from the analysis of the system to a threat database (102).

9. The method according to claim 8, wherein mapping components to the threat database (102) is based on a user input (205).

10. The method according to one of the preceding claims, wherein changes of the system automatically trigger another iteration of automatically generating security requirements.

11. The method according to one of the preceding claims, wherein the analysis of the system constitutes a threat analysis and risk assessment.

12. The method according to one of claims 1 to 10, wherein the generated (S5) security requirements are incorporated into a security concept.

13. The method according to one of the preceding claims, wherein the system is a vehicular system.

14. A computer program code comprising instructions, which, when executed by at least one processor, cause the at least one processor to perform a method according to any of claims 1 to 13 for automatically generating security requirements for a system.

15. An apparatus (10) for automatically generating security requirements for a system, the apparatus (10) comprising:
- a retrieving unit (12) configured to retrieve (S1) security related data for the system;
- an analysis unit (13) configured to automatically perform (S2) an analysis of the system based on the security related data; and
- a security unit (14) configured to automatically generate (S5) security requirements for the system based on the analysis.
